# FASCICULE DE BREVET EUROPEEN

(11) **EP 2 304 364 B1**
(45) Date de publication et mention de la délivrance du brevet: **04.01.2012**
(21) Numéro de dépôt: 09802552.1
(22) Date de dépôt: 17.07.2009
(51) Int. Cl.: F27B 7/20, C04B 7/36, F27D 17/00

(54) **PROCÉDÉ DE FABRICATION DE CLINKER DE CIMENT DANS UNE INSTALLATION, ET INSTALLATION DE FABRICATION DE CLINKER DE CIMENT EN TANT QUE TELLE**
VERFAHREN ZUR HERSTELLUNG VON ZEMENTKLINKERN IN EINEM WERK UND WERK ZUR HERSTELLUNG VON ZEMENTKLINKERN
PROCESS FOR MANUFACTURING CEMENT CLINKER IN A PLANT, AND CEMENT CLINKER MANUFACTURING PLANT AS SUCH

(30) Priorité: 01.08.2008 FR 0804407
(43) Date de publication de la demande: 06.04.2011
(73) Titulaire: Fives FCB, 59666 Villeneuve d'Ascq (FR)
(72) Inventeur: JORGET, Serge, F-59700 Marcq en Baroeul (FR); DEVROE, Sébastien, F-59777 Lille (FR)
(74) Mandataire: Boubal, Denis Henri Jacques
(86) Numéro de dépôt international: PCT/FR2009/000884
(87) Numéro de publication internationale: WO 2010/012881

(56) Documents cités:
- EP-A- 1 923 367

## Description

L'invention concerne un procédé de fabrication de clinker de ciment dans une installation, ainsi qu'une installation de fabrication de clinker de ciment en tant que telle.

La fabrication de ciment utilise pour sa plus grande part une matière cuite, le clinker, qui est produite à partir de minéraux dont le constituant essentiel est le carbonate de calcium. L'élaboration du clinker passe par une opération de cuisson qui produit de grandes quantités de dioxyde de carbone, tant par la décomposition du carbonate de calcium que par la combustion du combustible nécessaire à l'opération.

Par exemple, la production d'une tonne de ciment dit Portland s'accompagne ainsi de l'émission d'environ 530 kg de CO2 venant de la matière traitée et de 250 à 300 kg de CO2 venant du combustible. Ce dioxyde de carbone est émis dans les fumées, à une concentration inférieure à 30 %, le composant principal des fumées étant de l'azote. Dans ces conditions, il est difficile à isoler, notamment à séquestrer dans le but de limiter les rejets de CO2 dans l'atmosphère.

La fabrication de clinker de ciment utilise le plus souvent un procédé de cuisson dit en voie sèche, où les matières premières préalablement broyées, sont calcinées dans un four rotatif. Afin de diminuer les besoins énergétiques de l'opération, des échangeurs ont été ajoutés en amont et en aval du four rotatif, et récupèrent directement la chaleur contenue dans les matières et les fumées sortant du four. En amont, c'est un préchauffeur à cyclones où la matière crue est préchauffée en suspension, et partiellement décarbonatée. En aval, c'est un refroidisseur de clinker où la matière cuite est refroidie par le soufflage d'air froid. La plupart des installations fonctionnant en voie dite sèche comportent un réacteur de combustion en bas du préchauffeur, appelé précalcinateur, dans lequel est apportée une part importante du combustible consommé par l'unité de cuisson, Il est à noter que la majeure partie de la réaction de décarbonatation s'effectue dans le préchauffeur.

Plus précisément, dans une installation typique fonctionnant en voie sèche, 60 à 65 % du combustible sont apportés au précalcinateur, et le reste au four ; 85 % environ de la réaction de décarbonatation se produit avant l'entrée du four. Ainsi, sur les 780 à 830 kg de dioxyde de carbone émis par l'unité de cuisson, 76 % à 78 % sont générés au niveau du préchauffeur et précalcinateur, et seulement 22 à 24 % dans le four rotatif.

On connaît toutefois du document EP-1.923.367 une installation pour la fabrication de clinker de ciment qui comprend un préchauffeur à cyclones, un réacteur de précalcination, un four rotatif et un refroidisseur à clinker.

Les fumées produites par le réacteur de précalcination sont traitées séparément des fumées produites par le four rotatif et le préchauffeur a cyclones.

Selon ce document, on alimente le réacteur de précalcination avec un gaz riche en oxygène, pauvre en azote afin de concentrer le C02 et en faciliter la séquestration. Le C02 s'évacuant du réacteur de précalcination peut être piégé. Les fumées produites par le four et le préchauffeur à cyclones ne sont pas concentrées en C02, et sont évacués librement dans l'atmosphère.

L'objet de la présente invention vise à pallier les inconvénients précités en proposant un procédé de fabrication de clinker de ciment économiquement viable permettant de limiter les rejets de dioxyde de carbone dans l'atmosphère.

Un autre but de l'invention est de proposer un tel procédé qui peut être mis en oeuvre dans une installation techniquement proche de celle utilisée habituellement pour la production de clinker de ciment.

Un autre but de l'invention est de proposer une telle installation en tant que telle.

D'autres buts et avantages de la présente invention apparaîtront au cours de la description qui va suivre qui n'est donnée qu'à titre indicatif et qui n'a pas pour but de la limiter.

L'invention concerne, tout d'abord, un procédé de fabrication de clinker de ciment dans une installation comprenant :
- un préchauffeur à cyclones, destiné à préchauffer la matière crue,
- un réacteur de précalcination muni d'un ou plusieurs brûleurs, qui apporte de la chaleur au préchauffeur à cyclones,
- un four rotatif, muni d'un brûleur alimenté en combustible,
- un refroidisseur à clinker par soufflage d'un, gaz de refroidissement, au niveau de la sortie dudit four rotatif engendrant du gaz chaud,
   procédé dans lequel :
- on préchauffe les matières crues et on les décarbonate dans ledit préchauffeur à cyclones et/ou le réacteur de précalcination,
- on refroidit le clinker sortant du four dans ledit refroidisseur à clinker.

Selon l'invention :
- on sépare les fumées produites par le four rotatif et les gaz du préchauffeur de sorte que lesdites fumées et lesdits gaz ne se mélangent pas,
- on alimente le réacteur de précalcination avec un gaz riche en oxygène dont la teneur en azote est inférieure à 30 %, constituant la seule source d'oxygène dudit réacteur,
- on recycle une partie des gaz sortant dudit préchauffeur à cyclones dans ledit réacteur de précalcination, voire ledit préchauffeur, de manière à obtenir un flux adéquat nécessaire à la suspension des matières dans ledit préchauffeur, tandis que l'autre partie des gaz dudit préchauffeur à cyclones, riche en dioxyde de carbone, est adaptée en vue d'un traitement permettant de limiter les rejets en dioxyde de carbone, tel que par exemple la séquestration.

L'invention concerne également une installation de fabrication de clinker de ciment permettant notamment la mise en oeuvre du procédé, comprenant :
- un préchauffeur à cyclones, destiné à préchauffer la matière crue,
- un réacteur de précalcination muni d'un ou plusieurs brûleurs, qui apporte de la chaleur (gaz chauds) au préchauffeur à cyclones,
- un four rotatif, muni d'un brûleur alimenté en combustible,
- un refroidisseur à clinker par soufflage d'un gaz de refroidissement, au niveau de la sortie dudit four rotatif, engendrant du gaz chaud.

Selon l'invention, l'installation comprend en outre :
- des conduites séparées pour les fumées du four rotatif et les gaz du préchauffeur de sorte que lesdites fumées et lesdits gaz ne se mélangent pas,
- une source d'un gaz riche en oxygène dont la teneur en azote est inférieure à 30 %, alimentant le réacteur de précalcination,
- une conduite pour le recyclage d'une partie des gaz sortant dudit préchauffeur à cyclones dans le réacteur de précalcination, voire ledit préchauffeur.

L'invention sera mieux comprise à la lecture de la description suivante accompagnant les dessins en annexe parmi lesquels :
- la figure 1 illustre schématiquement un exemple du procédé de fabrication mis en oeuvre dans une installation, conforme à l'invention selon un premier mode de réalisation,
- la figure 2 illustre un procédé de fabrication de clinker de ciment et l'installation associée, conformes à l'invention selon un deuxième mode de réalisation.

Aussi, l'invention concerne un procédé de fabrication de clinker de ciment dans une installation.

Cette installation comprend :
- un préchauffeur à cyclones 3, 3ₐ destiné à préchauffer la matière crue,
- un réacteur de précalcination 4, muni d'un ou plusieurs brûleurs, qui apporte de la chaleur notamment sous la forme de gaz chauds au préchauffeur à cyclones,
- un four rotatif 1, muni d'un brûleur alimenté en combustible,
- un refroidisseur à clinker 5 par soufflage d'un gaz de refroidissement, au niveau de la sortie dudit four rotatif, engendrant du gaz chaud. Il s'agit donc d'une installation comprenant un préchauffeur à cyclones, un réacteur de précalcination, un four rotatif et un refroidisseur à clinker d'une manière équivalente aux installations de l'art antérieur.

Selon le procédé :
- on préchauffe les matières crues et on les décarbonate (pour leur plus grande partie) dans ledit préchauffeur à cyclones 3, 3ₐ et/ou le réacteur de précalcination 4,
- on refroidit le clinker sortant du four dans ledit refroidisseur à clinker 5.

Selon le procédé de fabrication conforme à l'invention :
- on sépare les fumées 10 produites par le four rotatif 1 et les gaz du préchauffeur 3, 3ₐ de sorte que lesdites fumées 10 du four et lesdits gaz du préchauffeur 3, 3ₐ ne se mélangent pas,
- on alimente le réacteur de précalcination 4 avec un gaz 9 riche en oxygène dont la teneur en azote est inférieure à 30 %, constituant la seule source d'oxygène dudit réacteur 4,
- on recycle une partie 8a des gaz 8 sortant dudit préchauffeur à cyclones 3, 3ₐ dans ledit réacteur de précalcination, voire ledit préchauffeur 3, 3ₐ, de manière à obtenir un flux adéquat nécessaire à la suspension des matières dans ledit préchauffeur, tandis que l'autre partie 8_{b} des gaz dudit préchauffeur à cyclones 3, 3ₐ, riche en dioxyde de carbone, est adaptée en vue d'un traitement permettant de limiter les rejets de dioxyde de carbone dans l'atmosphère.

Trois quarts environ du dioxyde de carbone étant générés dans le préchauffeur et le réacteur de précalcination, l'invention consiste ainsi à concentrer le CO₂ au moins dans ces parties de l'installation.

Les fumées 10 produites par le four 1 et celles de l'ensemble préchauffeur 3, 3ₐ réacteur 4 sont donc séparées. Au contraire, dans une installation traditionnelle de cimenterie, les fumées du four alimentent en gaz chaud l'ensemble préchauffeur/précalcinateur permettant, d'une part, un apport de chaleur dans cet ensemble, mais aussi de créer un flux de gaz dans l'ensemble nécessaire à la suspension des matières.

Dans l'installation selon l'invention, les fumées du four n'alimentent pas l'ensemble préchauffeur/précalcinateur. Par rapport à une installation traditionnelle, il se crée un double déséquilibre de fonctionnement, le flux de gaz dans le préchauffeur n'étant plus suffisant pour obtenir la suspension des matières, le flux thermique n'étant plus suffisant pour obtenir le préchauffage désiré.

Selon l'installation de l'invention, ce déséquilibre est réétabli en tout ou partie grâce au recyclage de la partie 8ₐ des gaz 8 sortant du préchauffeur. La partie des gaz recyclés est telle qu'elle permet d'obtenir un flux adéquat nécessaire à la suspension des matières dans le préchauffeur.

Plus précisément, selon un mode de réalisation, on recycle la partie 8ₐ des gaz 8 sortant du préchauffeur de manière à obtenir un rapport de débit massique entre la matière traitée et le flux nécessaire à la suspension des matières compris entre 0,5 kg/kg et 2 kg/kg.

Lorsqu'ils sont dirigés directement vers le réacteur de précalcination 4, le gaz de combustion dans le réacteur 4 est un mélange du gaz 9 riche en oxygène et de la partie recyclée 8ₐ riche en dioxyde de carbone. Avantageusement, ce mélange évite que le gaz de combustion soit trop concentré en oxygène, et ainsi, évite la création d'une flamme trop vive dans le réacteur 4 susceptible de le détériorer.

En outre, ce recyclage de la partie 8ₐ permet de recycler une quantité de chaleur produite par le préchauffeur 3, 3ₐ et le réacteur de précalcination 4. Afin de réduire encore plus la consommation de combustible dans le réacteur 4, le procédé peut prévoir une étape dans laquelle on réchauffe la partie 8ₐ des gaz recyclés dans le réacteur de précalcination 4, voire le préchauffeur 3, 3ₐ, via un échangeur 11, grâce notamment à la chaleur contenue dans les fumées 10 du four rotatif 1 et/ou à une partie du gaz chaud engendré par ledit refroidisseur à clinker 5.

Plus précisément, selon un mode de réalisation :
- on dirige une première partie 60 du gaz chaud produit dans ledit refroidisseur à clinker 5, dite flux secondaire, vers le four rotatif 1 pour être utilisé comme gaz de combustion, notamment par le ou les brûleurs du four 1,
- on dirige une seconde partie 6 du gaz chaud produit dans ledit refroidisseur à clinker 5, dit flux tertiaire, définie par une température au moins égale à 750 °C, et on la conduit séparément de la première partie jusqu'audit échangeur 11 de manière à réchauffer la partie 8ₐ des fumées recyclées,
- et on extrait une troisième partie 7 du gaz chaud produit dans ledit refroidisseur à clinker, dit flux excédentaire.

Eventuellement, on dépoussière les fumées 10 du four 1 dans un cyclone 12 et on introduit dans le préchauffeur 3, 3ₐ voire dans le réacteur de précalcination 4, la matière chaude ainsi recueillie.

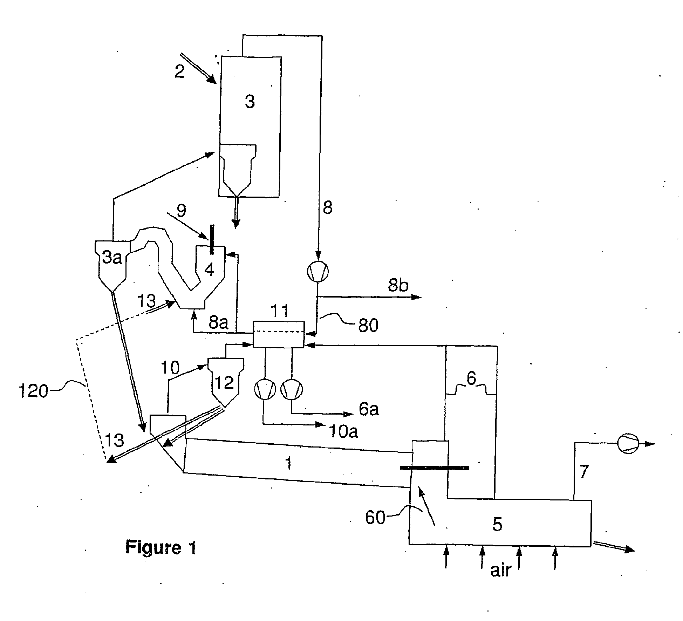

Nous décrivons maintenant partiellement l'exemple de la figure 1 et plus particulièrement la façon dont les gaz recyclés 8ₐ sont réchauffés par l'échangeur 11.

Dans cet exemple, le gaz de refroidissement du refroidisseur à clinker 5 est de l'air et contient ainsi une part importante d'azote.

L'air du refroidisseur est divisé en trois flux. Une partie 60 des gaz chauds produits dans le refroidisseur, dit flux secondaire est dirigée vers le four rotatif 1 pour être utilisée comme air de combustion dans le four.

Une seconde partie 6 de gaz chauds produits dans le refroidisseur à clinker, dit flux tertiaire, définie par une température au moins égale à 750 °C est conduite séparément de la première partie 60 jusqu'à l'échangeur 11 de manière à réchauffer la partie 8ₐ des gaz recylés.

Enfin, la troisième partie 7, de température inférieure à la température du flux tertiaire, est extraite et peut être utilisée pour la production d'énergie mécanique, voire d'électricité.

Les fumées 10 du four sont conduites vers un cyclone 12 afin de les dépoussiérer. Les poussières recueillies dans le cyclone 12 sont conduites jusqu'au réacteur de précalcination 4. Les fumées dépoussiérées traversent l'échangeur 11 afin de contribuer, avec le flux tertiaire 6, au réchauffement de la partie 8ₐ des gaz recyclés.

Après l'échangeur 11, la chaleur résiduelle des gaz 6ₐ issus du flux tertiaire et des fumées 10 issues du four rotatif 1, peut être utilisée également pour la production d'énergie mécanique, voire d'électricité.

Dans cet exemple, l'échangeur 11 permet d'échanger de la chaleur entre trois flux, à savoir la partie 8ₐ des gaz recyclés, le flux tertiaire 6 et les fumées 10. On désigne ainsi par échangeur 11 un échangeur au sens large, qui, éventuellement, peut être constitué de plusieurs modules échangeurs. D'une manière générale, dans cet exemple notamment on utilise la chaleur contenue dans les gaz 6ₐ, 10ₐ, plus particulièrement les fumées 10 du four 1 et/ou le flux tertiaire engendré par le refroidisseur à clinker, en sortie dudit échangeur 11, ainsi que la chaleur du flux excédentaire 7, voire l'autre partie 8_{b} des fumées non recyclée au moins partiellement, pour la production d'énergie, notamment d'électricité.

Dans cet exemple de la figure 1, on peut également utiliser au moins partiellement la partie 8_{b}, notamment non directement recyclée, des gaz riches en dioxyde de carbone comme fluide de transport pneumatique pour les combustibles solides et/ou de pulvérisation pour les combustibles liquides qui alimentent le ou les brûleurs du réacteur de précalcination 4 et/ou comme fluide de nettoyage pneumatique du préchauffeur à cyclones 3, 3_{b}.

On notera que dans cet exemple de la figure 1, seuls les gaz produits par l'ensemble réacteur de précalcination 4/préchauffeur à cyclones 3, 3ₐ sont destinés à subir un traitement afin de limiter les rejets en dioxyde de carbone. En effet, les fumées du four 10, riches en azote ne sont pas adaptées pour un tel traitement, notamment une séquestration.

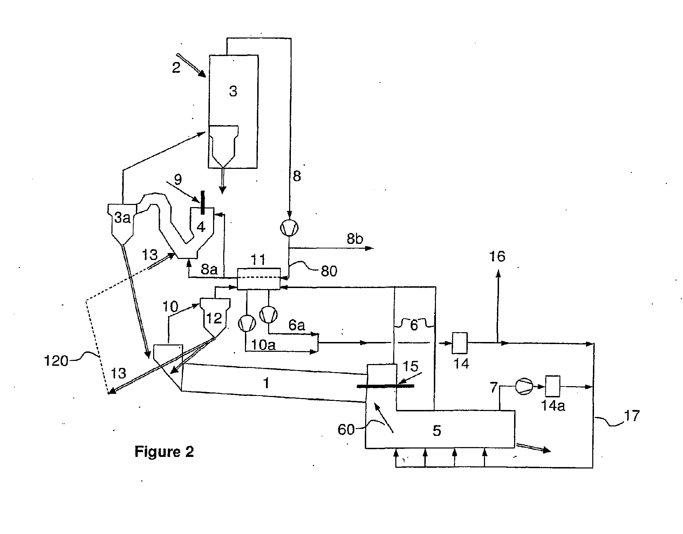

Selon un autre mode de réalisation, illustré à la figure 2, on concentre également les gaz du four rotatif 1 en dioxyde de carbone afin de leur faire subir un traitement permettant de limiter les rejets en CO₂ dans l'atmosphère. Plus particulièrement, selon ce mode de réalisation :
- on alimente le brûleur du four rotatif 1 avec un gaz 15 riche en oxygène dont la teneur en azote est inférieure à 30 %, constituant la seule source d'oxygène du four,
- on recycle une partie 17 des gaz produits par le four rotatif 1 et du gaz chaud engendré par le refroidisseur à clinker 5 que l'on refroidit pour alimenter en gaz de refroidissement ledit refroidisseur à clinker 5, tandis que l'autre partie 16 des gaz, riche en dioxyde de carbone, est adaptée notamment en vue de séquestrer le dioxyde de carbone.

Eventuellement, selon le mode de réalisation de la figure 2, on utilise une partie des gaz 8_{b}, 16 riches en dioxyde de carbone, respectivement de l'ensemble précalcinateur 4/préchauffeur 3, 3ₐ à cyclones et de l'ensemble four rotatif 1 refroidisseur à clinker 5 comme fluide de transport pneumatique pour le combustible solide et/ou de pulvérisation des combustibles liquides qui alimentent le brûleur du four rotatif et/ou comme fluide alimentant les appareils de nettoyage pneumatiques automatiques de la chambre d'entrée du four 1 et du refroidisseur 5.

Nous décrivons plus particulièrement en détail l'exemple de la figure 2. Dans cet exemple, les gaz de l'ensemble préchauffeur à cyclones 3, 3ₐ/réacteur de précalcination 4, d'une part, et du four rotatif 1/refroidisseur à clinker 5 d'autre part, sont recyclés de manière indépendante.

Plus particulièrement dans cet exemple illustré à la figure 2, un gaz 15 riche en oxygène alimente le brûleur du four rotatif 1 constituant la seule source d'oxygène du four.

Le gaz de refroidissement du refroidisseur à clinker 5 est constitué par des gaz recyclés, issus pour une partie, des gaz engendrés par le refroidisseur à clinker 5, et pour une autre partie des fumées 10 du four.

Aussi, le gaz de refroidissement est riche en dioxyde de carbone. Une partie 60 du gaz chaud produit dans le refroidisseur à clinker 5, dit flux secondaire, est dirigé vers le four rotatif 1. Plus précisément, elle se mélange avec le gaz 15 riche en oxygène, limitant ainsi la concentration en oxygène du gaz de combustion afin d'éviter une flamme trop vive au brûleur du four, susceptible de détériorer ledit four.

Une seconde partie 6 du gaz chaud, également riche en dioxyde de carbone, produit dans le refroidisseur à clinker 5, dit flux tertiaire, définie par une température au moins égale à 750 °, est conduite séparément de la première partie vers l'échangeur 11 de manière à réchauffer la partie 8ₐ des gaz recyclés.

Une troisième partie 7 du gaz chaud produit dans le refroidisseur à clinker, de température inférieure, est destinée à être recyclée avec une partie des fumées 10 du four dans le refroidisseur à clinker 5.

Plus précisément, les fumées du four 10 sont dépoussiérées dans un cyclone 12. Les poussières chaudes recueillies par le cyclone 12 sont dirigées dans le réacteur de précalcination 4 et/ou vers le four 1. Les fumées 10 dépoussiérées traversent l'échangeur 11 afin de réchauffer la partie 8ₐ des gaz recyclés du préchauffeur 3, 3ₐ.

De la même façon, ladite partie 6 des gaz produits dans le refroidisseur à clinker 5, dit flux tertiaire, définie par une température au moins égale à 750 °C est conduite jusqu'à l'échangeur 11 afin de réchauffer la partie 8ₐ des gaz recyclés.

Les gaz d'exhaure sortant de l'échangeur 11, à savoir les gaz 10ₐ issus des fumées 10 et les gaz 6ₐ issus du flux tertiaire sont alors conduits vers un échangeur 14 afin de les refroidir. Une partie de ces gaz 16 est non recyclée tandis que l'autre est dirigée vers le refroidisseur à clinker 5 afin de l'alimenter en gaz de refroidissement.

De la même façon, ledit flux excédentaire 7 est refroidi dans un autre échangeur 14ₐ et sert également comme gaz de refroidissement pour le refroidisseur à clinker 5.

Eventuellement, on peut utiliser une partie des gaz 8_{b}/16 riches en dioxyde de carbone, notamment non recyclés, issus respectivement, d'une part, de l'ensemble réacteur de précalcination 4/préchauffeur à cyclones 3, 3ₐ, et d'autre part, de l'ensemble refroidisseur à clinker 5/four rotatif 1, comme fluide de transport pneumatique pour le combustible solide et/ou de pulvérisation des combustibles liquides qui alimentent le brûleur du four rotatif 1 et/ou comme fluide alimentant les appareils de nettoyage pneumatique automatique de la chambre d'entrée du four 1 et du refroidisseur à clinker 5.

D'une manière générale, le gaz 9, riche en oxygène et alimentant le réacteur de précalcination 4 peut être d'une teneur en azote inférieure à 5 %. Le cas échéant, le gaz 15 riche en oxygène et alimentant, notamment selon l'exemple de la figure 2, le brûleur du four rotatif 1 peut être également à une teneur en azote inférieure à 5 %.

L'invention concerne aussi une installation pour la fabrication de clinker de ciment en tant que telle. Cette installation comprend :
- un préchauffeur à cyclones 3, 3ₐ, destiné à préchauffer la matière crue 2,
- un réacteur de précalcination 4, muni d'un ou plusieurs brûleurs, qui apporte de la chaleur au préchauffeur à cyclones 3, 3ₐ,
- un four rotatif 1 muni d'un brûleur alimenté en combustible,
- un refroidisseur à clinker 5 par soufflage d'un gaz de refroidissement au niveau de la sortie dudit four rotatif 1, engendrant du gaz chaud.

Selon l'invention, ladite installation comprend :
- des conduites séparées pour les fumées 10 du four rotatif et les gaz du préchauffeur 3, 3ₐ de sorte que les fumées et lesdits gaz ne se mélangent pas,
- une source d'un gaz 9 riche en oxygène dont la teneur en azote est inférieure à 30 %, alimentant le réacteur de précalcination 4,
- une conduite 80 pour le recyclage d'une partie 8ₐ des gaz 8 sortant dudit préchauffeur à cyclones 3, 3ₐ dans le réacteur de précalcination voire ledit préchauffeur 3, 3ₐ. Il pourra notamment s'agir des installations précédemment décrites aux figures 1 et 2, permettant la mise en oeuvre du procédé conforme à l'invention.

Plus généralement, un échangeur 11 peut coopérer avec les fumées 10 du four rotatif et au moins une partie du gaz chaud généré par le refroidisseur à clinker 5 de manière à réchauffer la partie 8ₐ recyclée des gaz 8 sortant du préchauffeur à cyclones 3, 3ₐ.

Un cyclone 12 peut être prévu pour dépoussiérer les fumées 10 du four rotatif 1. Une conduite 120 permet éventuellement d'introduire la poussière recueillie par le cyclone 12 dans le réacteur de précalcination 4, voire dans le réchauffeur 3, 3ₐ.

Eventuellement, notamment selon l'exemple de la figure 2, l'installation peut présenter en outre
- une source d'un gaz 15 riche en oxygène dont la teneur en azote est inférieure à 30 %, alimentant le brûleur du four rotatif 1,
- des conduites permettant le recyclage dans le refroidisseur à clinker 5 d'une partie des fumées 10 du four rotatif 1 et du gaz chaud engendré par ledit refroidisseur à clinker 5, un ensemble d'échangeur 11, 14, 14ₐ permettant de refroidir les gaz recyclés pour alimenter ledit refroidisseur à clinker 5 en gaz de refroidissement.

Nous décrivons maintenant les performances d'une installation de l'état de l'art puis celles escomptées avec l'installation précédemment décrite et illustrée à la figure 1, et enfin, celles de l'installation précédemment décrite et illustrée à la figure 2.

Etat de l'art : L'installation considérée de l'état de l'art est une unité de production de clinker de taille moyenne, représentative de la capacité d'un grand nombre d'unités existantes, et qui produit 5.000 tonnes par jour de clinker à partir d'un débit de matières crues de 337 tonnes par heure de matières crues.

Cette installation, de l'état de l'art consomme 3.000 MJ par tonne de clinker produit, apportés sous forme de combustible dont 62,8 % sont introduits au niveau du réacteur de précalcination. On considère le cas où le combustible est du coke de pétrole, ayant un pouvoir calorifique inférieur de 34.300 kJ/kg et une teneur en azote de 2 %.

Le refroidisseur à clinker produit entre autres 117.000 Nm³/heure d'air tertiaire à 890 °C, qui alimente la combustion du réacteur de précalcination, et 210.000 Nm³/h d'air d'exhaure à 245 °C. Les fumées du préchauffeur à cyclones ont un débit de 286.200 Nm³/h à une température de 320 °C. Le rapport de débits massiques entre la matière alimentée et les fumées du préchauffeur est 0,82.

La composition des fumées produites et sortant du préchauffeur est :
- oxygène : 3,6 %
- eau : 7,1 %
- dioxyde de carbone : 29,6 %
- azote : 59,7 %.

Les fumées du four rotatif ont un débit de 86.200 Nm³/h et une température de 1.160 °C. Elles sont utilisées dans le préchauffeur à cyclones. La composition des fumées produites dans le four est :
- oxygène : 3,2 %
- eau : 5,9 %
- dioxyde de carbone : 21,5 %
- azote : 69,4 %.

Dans ces conditions, 78,1 % de la quantité totale de dioxyde de carbone sont générés dans le préchauffeur et seulement 21,9 % dans le four rotatif.

### Exemple 1 selon l'invention :

L'installation considérée est comparable à celle de l'état de l'art mais cette fois on met en oeuvre la concentration de dioxyde de carbone dans le préchauffeur, selon l'invention illustrée à la figure 1.

On apporte du combustible dans le réacteur de précalcination soit 1.972 MJ par tonne de clinker produit. Le fonctionnement du four n'est globalement pas modifié par rapport à l'état de l'art avec une consommation de 1.117 MJ par tonne de clinker. Les besoins en oxygène pour la combustion au précalcinateur sont de 27.650 Nm³/h, apportés sous forme d'oxygène pur.

Ainsi, on produit au préchauffeur 235.600 Nm³/h de fumées à 325 °C dont 150.800 Nm³/h sont recyclées et 84.800 Nm³/h sont extraites pour en traiter le CO₂. Le rapport de débits massiques entre la matière alimentée et les fumées du préchauffeur est de 0,82 comme dans l'exemple de l'état de l'art.

La composition de ces fumées produites et sortant du préchauffeur est :
- oxygène : 5,1 %
- eau : 15,8 %
- dioxyde de carbone : 78,85 %
- azote : 0,24 %
- CO₂ sur fumées sèches : 93,6 %.

Le débit massique de CO₂ émis par les fumées est de 36,4 tonnes/heure ; le débit massique de CO₂ qui peut être séquestré à partir de la fumée extraite du préchauffeur est de 131,34 t/h, soit 78,2 % du total.

Les fumées du four sont conduites à travers un cyclone qui les débarrasse de la partie majeure des poussières contenues à 1.160 °C, lesquelles poussières sont réintroduites dans le réacteur de précalcination.

On prélève du refroidisseur 145.800 Nm³/h d'air tertiaire à 810 °C qui sont conduits avec les fumées du four à travers un échangeur et transfèrent leur énergie aux fumées recyclées du préchauffeur en refroidissant jusqu'à 350 °C. Lesdites fumées du préchauffeur sont ainsi portées à la température de 943 °C avant d'être introduites dans le précalcinateur.

### Exemple 2 selon l'invention :

L'installation considérée est celle précédemment décrite et illustrée à la figure 2, dans laquelle on met de plus en oeuvre le recyclage des fumées dans le four rotatif, selon l'invention, pour en concentrer le dioxyde de carbone.

Le fonctionnement du préchauffeur est identique à celui de l'exemple précédent, avec l'alimentation d'oxygène et le recyclage des fumées très riches en CO₂.

Cette fois, on échange une part maximale de la chaleur contenue dans les gaz, d'une part les fumées du four, et d'autre part les gaz chauds produits dans le refroidisseur à clinker, de façon à abaisser la température de ces gaz jusqu'à 135 °C, en conduisant les gaz à travers divers échangeurs. On réalise le soufflage dans le refroidisseur à clinker à l'aide de ces gaz ainsi refroidis.

Au four rotatif, les besoins en combustible sont de 1.117 MJ par tonne de clinker produite, et la combustion du combustible est assurée à l'aide d'oxygène pur. Ainsi, les fumées ont la composition suivante :
- oxygène : 6,5 %
- eau : 16,2 %
- dioxyde de carbone : 77,08 %
- azote : 0,19 %
- CO₂ sur fumées sèches : 92,0 %.

Ces fumées sont utilisées et recyclées, de telle sorte que l'on ait le fonctionnement suivant. On souffle dans le refroidisseur à clinker 306.900 Nm³/h de fumées dont la température a été abaissée à 135 °C. On produit 53.500 Nm³/h de gaz très chauds, à 1.180 °C, que l'on dirige vers le four ; on produit également 112.900 Nm³/h de gaz chauds, à 810 °C, dont on utilise une partie de la chaleur pour réchauffer les fumées recyclées du préchauffeur : on produit enfin 140.500 Nm³/h de gaz moins chauds, à 262 °C.

Les fumées du four, d'un débit de 77.600 Nm³/h et à une température de 1.180 °C, sont utilisées pour réchauffer les fumées recyclées du préchauffeur. On extrait 24.100 Nm³/h de fumées afin d'en extraire le dioxyde de carbone qui représente 36,4 t/h. On refroidit le reste à 350 °C pour l'utilisation dans le refroidisseur à clinker. Le clinker est refroidi dans le refroidisseur jusqu'à une température de 205 °C. On apporte au four pour la combustion 14.700 Nm³/h d'oxygène pur.

Ainsi, on émet la totalité du dioxyde de carbone de l'installation sous forme de fumées concentrées à moins 92 %, aptes à un traitement pour séquestration.

Naturellement, d'autres modes de mise en oeuvre auraient pu être envisagés par l'homme du métier sans pour autant sortir du cadre de l'invention définie par les revendications ci-après.

## Revendications

1. Procédé de fabrication de clinker de ciment dans une installation comprenant :
- un préchauffeur à cyclones (3, 3ₐ), destiné à préchauffer la matière crue (2),
- un réacteur de précalcination (4), muni d'un ou plusieurs brûleurs, qui apporte de la chaleur au préchauffeur à cyclones (3, 3ₐ),
- un four rotatif (1), muni d'un brûleur alimenté en combustible,
- un refroidisseur à clinker (5) par soufflage d'un gaz de refroidissement, au niveau de la sortie dudit four rotatif (1), engendrant du gaz chaud,
procédé dans lequel :
- on préchauffe les matières crues et on les décarbonate dans ledit préchauffeur à cyclones (3, 3ₐ) et/ou ledit réacteur de précalcination (4),
- on refroidit le clinker sortant du four dans ledit refroidisseur à clinker (5),
**caractérisé en ce que** :
- on sépare les fumées (10) produites par le four rotatif (1) et les gaz du préchauffeur (3, 3ₐ) de sorte que lesdites fumées (10) et lesdits gaz du préchauffeur ne se mélangent pas,
- on alimente le réacteur de précalcination (4) avec un gaz (9) riche en oxygène dont la teneur en azote est inférieure à 30%, constituant la seule source d'oxygène dudit réacteur (4),
- on recycle une partie (8ₐ) des gaz (8) sortant dudit préchauffeur à cyclones (3, 3ₐ) dans ledit réacteur de précalcination (4), voire ledit préchauffeur à cyclones (3, 3a), de manière à obtenir un flux adéquat nécessaire à la suspension des matières dans ledit préchauffeur, tandis que l'autre partie (8b) des gaz dudit préchauffeur à cyclones (3, 3ₐ), riche en dioxyde de carbone, est adaptée en vue d'un traitement permettant de limiter les rejets en dioxyde de carbone dans l'atmosphère, tel que par exemple, la séquestration.

2. Procédé selon la revendication 1, dans lequel on recycle ladite partie (8a) des gaz (8) sortant du préchauffeur à cyclones (3, 3ₐ) de manière à obtenir un rapport de débits massiques entre la matière traitée et le flux nécessaire à la suspension des matières compris entre 0,5 kg/kg et 2 kg/kg.

3. Procédé selon la revendication 1 ou 2, dans lequel on réchauffe la partie (8a) des gaz recyclés dans le réacteur de précalcination (4) voire le préchauffeur (3,3a), via un échangeur (11), grâce à la chaleur contenue dans les fumées (10) du four rotatif (1) et/ou à une partie du gaz chaud engendré par le refroidisseur à clinker (5).

4. Procédé selon la revendication 3, dans lequel :
- on dirige une première partie (60) de gaz chaud produit dans ledit refroidisseur à clinker (5), dit flux secondaire, vers le four rotatif (1),
- on dirige une seconde partie (6) de gaz chaud produit dans ledit refroidisseur à clinker, dit flux tertiaire, définie par une température au moins égale à 750°C, et on la conduit séparément de la première partie jusqu'audit échangeur (11) de manière à réchauffer le partie (8ₐ) des gaz recyclés,
- et on extrait une troisième partie (7) de gaz chaud produit dans ledit refroidisseur à clinker, dite flux excédentaire,

5. Procédé selon la revendication 4, dans lequel on utilise la chaleur contenue dans les gaz (6ₐ, 10ₐ), plus particulièrement les fumées du four et/ou flux du refroidisseur en sortie dudit échangeur (11), ainsi que la chaleur du flux excédentaire (7), voire l'autre partie (8_{b)} des fumées non recyclées, au moins partiellement, pour la production d'énergie, notamment d'électricité.

6. Procédé selon l'une des revendications 1 à 5, dans lequel on dépoussière les fumées (10) du four dans un cyclone (12) et on introduit dans le préchauffeur (3, 3ₐ), voire dans le réacteur de précalcination (4), la matière (13) ainsi recueillie.

7. Procédé selon l'une des revendications 1 à 6 dans lequel on utilise au moins partiellement ladite partie (8b), non recyclée, de gaz riche en dioxyde de carbone comme fluide de transport pneumatique pour les combustibles solides et/ou de pulvérisation pour les combustibles liquides qui alimentent les brûleurs du réacteur de précalcination (4) et/ou comme fluide de nettoyage pneumatique du préchauffeur à cyclones (3,3a).

8. Procédé selon l'une des revendications 1 à 4, dans lequel :
- on alimente le brûleur du four rotatif (1) avec un gaz (15) riche en oxygène dont la teneur en azote est inférieure à 30%, constituant la seule source d'oxygène du four,
- on recycle une partie (17) des gaz produits par le four rotatif (1) et du gaz chaud engendré par le refroidisseur à clinker (5) que l'on refroidit pour alimenter en gaz de refroidissement ledit refroidisseur (5), tandis que l'autre partie (16) des gaz, riche en dioxyde de carbone, est adaptée en vue d'un traitement permettant de limiter les rejets de dioxyde de carbone dans l'atmosphère, tel notamment que la séquestration.

9. Procédé selon l'une des revendications 1 à 8, dans lequel on utilise une partie des gaz (8b,16) riches en dioxyde de carbone comme fluide de transport pneumatique pour le combustible solide et/ou de pulvérisation des combustibles liquides qui alimentent le brûleur du four rotatif et/ou comme fluide alimentant les appareils de nettoyage pneumatiques automatiques de la chambre d'entrée du four (1) et du refroidisseur (5).

10. Procédé selon l'une des revendications 1 à 9 dans lequel ledit gaz (9 ou 15) riche en oxygène a une teneur en azote inférieure à 5%.

11. Installation pour la fabrication de clinker de ciment, notamment pour la mise en oeuvre du procédé selon la revendication 1, comprenant :
- un préchauffeur à cyclones (3,3a) destiné à préchauffer la matière crue (2),
- un réacteur de précalcination (4), muni d'un ou plusieurs brûleurs, qui apporte de la chaleur au préchauffeur à cyclone (3, 3ₐ),
- un four rotatif (1), muni d'un brûleur alimenté en combustible,
- un refroidisseur à clinker (4) par soufflage d'un gaz de refroidissement, au niveau de la sortie dudit four rotatif (1), engendrant du gaz chaud,
**caractérisée en ce qu'**elle comprend :
- des conduites séparées pour les fumées (10) du four rotatif (1) et les gaz du préchauffeur (3,3a) de sorte que lesdites fumées et lesdits gaz ne se mélangent pas,
- une source d'un gaz (9) riche en oxygène dont la teneur en azote est inférieure à 30%, alimentant le réacteur de précalcination (4),
- une conduite (80) pour le recyclage d'une partie (8a) des gaz (8) sortant dudit préchauffeur à cyclones (3, 3ₐ) dans le réacteur de précalcination (4), voire ledit préchauffeur (3, 3ₐ).

12. Installation selon la revendication 11, dans laquelle un échangeur (11) coopère avec les fumées (10) du four rotatif (1) et au moins une partie du gaz chaud générée par ledit refroidisseur à clinker (5) de manière à réchauffer la partie (8a) recyclée des gaz (8) sortant du préchauffeur à cyclones (3,3a).

13. Installation selon la revendication 11 ou 12, dans laquelle un cyclone (12) est prévu pour dépoussiérer les fumées (10) dudit four rotatif (1).

14. Installation selon la revendication 13 dans laquelle une conduite (120) permet d'introduire la poussière recueillie par le cyclone (12) dans le réacteur de précalcination (4), voire dans le préchauffeur (3, 3ₐ)**,**

15. Installation selon l'une des revendications 11 à 14 comprenant, en outre :
- une source d'un gaz (15) riche en oxygène dont la teneur en azote est inférieure à 30%, alimentant le brûleur du four rotatif (1),
- des conduites permettent le recyclage dans le refroidisseur à clinker (5) d'une partie des fumées (10) du four rotatif (1) et du gaz chaud engendré par ledit refroidisseur à clinker (5), un ensemble d'échangeurs (11, 14, 14ₐ) permettant de refroidir les gaz recyclés pour alimenter ledit refroidisseur à clinker (5) en gaz de refroidissement.

## Claims

1. Method for producing cement clinker in a plant comprising:
- a cyclone preheater (3, 3a), intended to preheat the raw material (2),
- a precalcination reactor (4), provided with one or several burners, which provide heat to the cyclone preheater (3, 3 a),
- a rotary furnace (1), provided with a burner supplied with fuel,
- a clinker cooler (5) through the blowing of a cooling gas, at the outlet of said rotary furnace (1), generating hot gas,
method wherein:
- the raw materials are preheated and decarbonated in said cyclone preheater (3, 3a) and/or said precalcination reactor (4),
- the clinker leaving the furnace is cooled in said clinker cooler (5),
**characterised in that**:
- the fumes (10) produced by the rotary furnace (1) and the gases from the preheater (3, 3a) are separated in such a way that said fumes (10) and said gases from the preheater do not mix,
- the precalcination reactor (4) is supplied with an oxygen-rich gas (9) the nitrogen content of which is less than 30%, constituting the sole oxygen source for said reactor (4),
- a portion (8a) of the gases (8) leaving said cyclone preheater (3, 3a) is recycled into said precalcination reactor (4), or even to said cyclone preheater (3, 3a), so as to obtain a suitable flux necessary for suspending matter in said preheater, while the other portion (8b) of the gasses from said cyclone preheater (3, 3a), rich in carbon dioxide, is adapted for the purpose of a treatment making it possible to limit the amount of carbon dioxide discharged into the atmosphere, such as for example, sequestration.

2. Method according to claim 1, wherein said portion (8a) of gases (8) leaving the cyclone preheater (3, 3a) is recycled in such a way as to obtain a mass flow ratio between the matter treated and the flow needed for suspending matter between 0.5 kg/kg and 2 kg/kg.

3. Method according to claim 1 or 2, wherein the portion (8a) of the gases recycled in the precalcination reactor (4) or even in the preheater (3, 3a) is heated, via an exchanger (11), owing to the heat contained in the fumes (10) of the rotary furnace ( 1 ) and/or in a portion of the hot gas generated by the clinker cooler (5).

4. Method according to claim 3, wherein:
- a first portion (60) of hot gas produced in said clinker cooler (5), called secondary flow, is directed to the rotary furnace (1),
- a second portion (6) of hot gas produced in said clinker cooler, called tertiary flow, defined by a temperature at least equal to 750°C is directed, and is conducted separately from the first portion to said exchanger (11) in such a way as to heat the portion (8a) of the recycled gases,
- and a third portion (7) of hot gas produced in said clinker cooler, called excess flow, is extracted.

5. Method according to claim 4, wherein the heat contained in the gases (6a, 10a), more particularly the fumes from the furnace and/or flow from the cooler at the outlet of said exchanger (11), as well as the heat from the excess flow (7), or even the other portion (8b) of non-recycled fumes, at least partially, is used for the production of energy, in particular electricity.

6. Method according to one of claims 1 to 5, wherein the dust is removed from the fumes (10) of the furnace in a cyclone (12) and the matter (13) collected as such is introduced into the preheater (3, 3a), or even into the precalcination reactor (4).

7. Method according to one of claims 1 to 6 wherein at least partially said non-recycled portion (8b), of gas rich in carbon dioxide is used as a pneumatic transport fluid for solid fuels and/or as a spray for liquid fuels which supply the burners of the precalcination reactor (4) and/or as a pneumatic cleaning fluid of the cyclone preheater (3, 3a).

8. Method according to one of claims 1 to 4, wherein:
- the burner of the rotary furnace (1) is supplied with an oxygen-rich gas (15) the nitrogen content of which is less than 30%, constituting the sole oxygen source for the furnace,
- a portion (17) of the gases produced by the rotary furnace (1) and of the hot gas generated by the clinker cooler (5) is recycled and is cooled in order to supply with cooling air said cooler (5), while the other portion (16) of the carbon dioxide-rich gases is adapted for the purpose of a treatment making it possible to limit the amount of carbon dioxide discharged into the atmosphere, such as in particular sequestration.

9. Method according to one of claims 1 to 8, wherein a portion of the carbon dioxide-rich gases (8b, 16) is used as a pneumatic transport fluid for the solid fuel and/or as a spray of liquid fuels which supply the burner of the rotary furnace and/or as a fluid supplying the automatic pneumatic cleaning devices of the input chamber of the furnace (1) and of the cooler (5).

10. Method according to one of claims 1 to 9 wherein said oxygen-rich gas (9 or 1 S) has a nitrogen content less than 5%.

11. Plant for producing cement clinker, in particular for the method according to claim 1, comprising:
- a cyclone preheater (3, 3a) intended to preheat the raw material (2),
- a precalcination reactor (4), provided with one or several burners, which brings heat to the cyclone preheater (3, 3a),
- a rotary furnace (1), provided with a burner supplied with fuel,
- a clinker cooler (4) through the blowing of a cooling gas, at the outlet of said rotary furnace (1), generating hot gas,
**characterised in that** it comprises:
- separate ducts for the fumes (10) from the rotary furnace (1) and the gases from the preheater (3, 3a) in such a way that said fumes and said gases do not mix,
- a source of an oxygen-rich gas (9) of which the nitrogen content is less than 30%, supplying the precalcination reactor (4),
- a duct (80) for the recycling of a portion (8a) of the gases (8) leaving said cyclone preheater (3, 3a) in the precalcination reactor (4), or even in said preheater (3, 3a).

12. Plant according to claim 11, wherein an exchanger (11) cooperates with the fumes (10) of the rotary furnace (1) and at least one portion of the hot gas generated by said clinker cooler (5) in such a way as to heat the recycled portion (8a) of the gases (8) leaving the cyclone preheater (3, 3a).

13. Plant according to claim 11 or 12, wherein a cyclone (12) is provided in order to remove the dust from the fumes (10) of said rotary furnace (1).

14. Plant according to claim 13 wherein a duct (120) makes it possible to introduce the dust collected by the cyclone (12) into the precalcination reactor (4), or even into the preheater (3, 3a),

15. Plant according to one of claims 11 to 14, further comprising:
- a source of oxygen-rich gas (15), the nitrogen content of which is less than 30%, supplying the burner of the rotary furnace (1),
- ducts making possible the recycling in the clinker cooler (5) of a portion of the fumes (10) of the rotary furnace (1) and of the hot gas generated by said clinker cooler (5), a set of exchangers (11, 14, 14a) making it possible to cool the recycled gases in order to supply said clinker cooler (5) with cooling gas.

## Patentansprüche

1. Verfahren zur Herstellung von Zementklinker in einer Anlage, umfassend:
- einen Vorwärmer mit Zyklonen (3, 3ₐ), der dazu vorgesehen ist, das Rohmaterial (2) vorzuwärmen,
- einen Vorkalzinierungsreaktor (4), ausgestattet mit einem oder mehreren Brennern, der dem Vorwärmer mit Zyklonen (3, 3ₐ) Hitze zuführt,
- einen Drehrohrofen (1), der mit einem Brenner ausgestattet ist, der mit Brennstoff versorgt wird,
- einen Klinkerkühler (5) durch Blasen eines Kühlgases auf der Ebene des Ausgangs des Drehrohrofens (1), der heißes Gas erzeugt,
Verfahren, wobei;
- die Rohmaterialien vorgewärmt werden und im Vorwärmer mit Zyklonen(3, 3ₐ) und/oder dem Vorkalzinierungsreaktor (4) entkarbonisiert werden,
- der Klinker, der den Ofen verlässt, im Klinkerkühler (5) abgekühlt wird,
**dadurch gekennzeichnet, dass**:
- der Rauch (10), der vom Drehrohrofen (1) erzeugt wird, und die Gase des Vorwärmers (3, 3a) getrennt sind, so dass sich der Rauch (10) und die Gase des Vorwärmers nicht vermischen,
- der Vorkalzinierungsreaktor (4) mit einem sauerstoffreichen Gas (9) beschickt wird, dessen Stickstoffgehalt geringer als 30% ist, und der die einzige Sauerstoffquelle des Reaktors (4) darstellt,
- ein Teil (8ₐ) der Gase (8), die aus dem Vorwärmer mit Zyklonen (3, 3a) in den Vorkalzinierungsreaktor (4), oder sogar in den Vorwärmer mit Zyklonen (3, 3a) austreten, derart recycelt werden, dass ein angemessener Fluss erhalten wird, der für die Suspension der Materialien im Vorwärmer erforderlich ist, während der andere Teil (8b) der Gase des Vorwärmers mit Zyklonen (3, 3a), reich an Kohlendioxid, für eine Behandlung angepasst wird, die es ermöglicht, die Kohlendioxidausstöße in die Atmosphäre zu begrenzen, wie z.B. die Sequestrierung.

2. Verfahren nach Anspruch 1, wobei der Teil (8a) der Gase (8), die aus dem Vorwärmer mit Zyklonen (3, 3ₐ) austreten, recycelt wird, um ein Verhältnis der Massenströme zwischen dem behandelten Material und dem Fluss, der für die Suspension der Materien erforderlich ist, zu erhalten, der zwischen 0,5 kg/kg und 2 kg/kg liegt.

3. Verfahren nach Anspruch 1 oder 2, wobei der Teil (8a) der recycelten Gase im Vorkalzinierungsreaktor (4), sogar im Vorwärmer (3, 3a), über einen Tauscher (11) dank der Hitze, die im Rauch (10) des Drehrohrofens (1) enthalten ist, und/oder eines Teils des heißen Gases, das vom Klinkerkühler (5) erzeugt wird, erwärmt wird.

4. Verfahren nach Anspruch 3, wobei:
- ein erster Teil (60) des heißen Gases, das im Klinkerkühler (5) erzeugt wird, bezeichnet als sekundärer Fluss, in den Drehrohrofen (1) geleitet wird,
- ein zweiter Teil (6) des heißen Gases, das im Klinkerkühler (5) erzeugt wird, bezeichnet als tertiärer Fluss, definiert durch eine Temperatur von mindestens gleich 750 °C, geleitet und getrennt vom ersten Teil bis zum Tauscher (11) geführt wird, so dass der Teil (8ₐ) der recycelten Gases erwärmt wird,
- ein dritter Teil (7) des heißen Gases, das im Klinkerkühler erzeugt wird, genannt überschüssiger Fluss, extrahiert wird.

5. Verfahren nach Anspruch 4, wobei die Hitze, die in den Gasen (6ₐ, 10ₐ), insbesondere dem Rauch des Ofens und/oder des Kühlers am Ausgang des Tauschers (11) enthalten ist, ebenso wie die Hitze des überschüssigen Flusses (7), sogar des anderen Teils (8_{b}) des nicht recycelten Rauchs, mindestens teilweise für die Erzeugung von Energie, insbesondere von Elektrizität, verwendet wird.

6. Verfahren nach einem der Ansprüche 1 bis 5, wobei der Rauch (10) des Ofens in einem Zyklon (12) entstaubt wird und das so gesammelte Material (13) in den Vorwärmer (3, 3a₎, sogar den Vorkalzinierungsreaktor (4) eingeführt wird.

7. Verfahren nach einem der Ansprüche 1 bis 6, wobei mindestens teilweise der nicht recycelte Teil (8b) des kohlendioxidreichen Gases als Fluid zum pneumatischen Transport für die festen Brennstoffe und/oder zur Pulverisierung für die flüssigen Brennstoffe, die die Brenner des Vorkalzinierungsreaktors (4) versorgen, und/oder als Fluid zur pneumatischen Reinigung des Vorwärmers mit Zyklonen (3, 3a) verwendet wird.

8. Verfahren nach einem der Ansprüche 1 bis 4, wobei:
- der Brenner des Drehrohrofens (1) mit einem sauerstoffreichen Gas (15) beschickt wird, dessen Stickstoffgehalt geringer als 30% ist, und das die einzige Sauerstoffquelle des Ofens darstellt,
- ein Teil (17) der Gase, die vom Drehrohrofen (1) erzeugt werden, und des heißen Gases, das vom Klinkerkühler (5) erzeugt wird, das gekühlt wird, um den Kühler (5) mit Kühlgas zu beschicken, recycelt wird, während der andere Teil (16) der kohlendioxidreichen Gase für eine Behandlung angepasst wird, die ermöglicht, die Kohlendioxidausstöße in die Atmosphäre zu begrenzen, wie z.B. die Sequestrierung.

9. Verfahren nach einem der Ansprüche 1 bis 8, wobei ein Teil der kohlendioxidreichen Gase (8b, 16) als Fluid zum pneumatischen Transport für die festen Brennstoffe und/oder zur Pulverisierung für die flüssigen Brennstoffe, die den Brenner des Drehrohrofens versorgen und/oder als Fluid, das die automatischen pneumatischen Reinigungsgeräte der Eintrittskammer des Ofens (1) und des Kühlers (5) versorgen, verwendet wird.

10. Verfahren nach einem der Ansprüche 1 bis 9, wobei das sauerstoffreiche Gas (9 oder 15) einen Stickstoffgehalt von weniger als 5% aufweist.

11. Anlage zur Herstellung von Zementklinker, insbesondere zur Durchführung des Verfahrens nach Anspruch 1, umfassend:
- einen Vorwärmer mit Zyklonen (3, 3a), der dazu vorgesehen ist, das Rohmaterial (2) vorzuwärmen,
- einen Vorkalzinierungsreaktor (4), der mit einem oder mehreren Brennern ausgestattet ist, der dem Vorwärmer mit Zyklonen (3, 3ₐ) Hitze zuführt,
- einen Drehrohrofen (1), der mit einem Brenner ausgestattet ist, der mit Brennstoff versorgt wird,
- einen Klinkerkühler (4) durch Blasen eines Kühlgases auf der Ebene des Ausgangs des Drehrohrofens (1), der heißes Gas erzeugt,
**dadurch gekennzeichnet, dass** sie Folgendes umfasst:
- getrennte Leitungen für den Rauch (10) des Drehrohrofens (1) und die Gase des Vorwärmers (3, 3a), so dass sich der Rauch und die Gase nicht vermischen,
- eine Quelle eines sauerstoffreichen Gases (9), dessen Stickstoffgehalt geringer als 30% ist, und die den Vorkalzinierungsreaktor (4) versorgt.
- eine Leitung (80) für das Recycling eines Teils (8a) der Gase (8), die aus dem Vorwärmer mit Zyklonen (3, 3ₐ) im Vorkalzinierungsreaktor (4), sogar dem Vorwärmer (3, 3ₐ) austreten.

12. Anlage nach Anspruch 11, wobei ein Tauscher (11) mit dem Rauch (10) des Drehrohrofens (1) und mindestens einem Teil des heißen Gases, das vom Klinkerkühler (5) erzeugt wird, zusammenarbeitet, um den recycelten Teil (8a) der Gase (8), die aus dem Vorwärmer mit Zyklonen (3, 3a) austreten, zu erhitzen.

13. Anlage nach Anspruch 11 oder 12, wobei ein Zyklon (12) dazu vorgesehen ist, den Rauch (10) des Drehrohrofens (1) zu entstauben.

14. Anlage nach Anspruch 13, wobei eine Leitung (120) ermöglicht, den Staub, der vom Zyklon (12) gesammelt wurde, in den Vorkalzinierungsreaktor (4), sogar den Vorwärmer (3, 3ₐ) einzuführen.

15. Anlage nach einem der Ansprüche 11 bis 14, außerdem umfassend:
- eine Quelle eines sauerstoffreichen Gases (15), dessen Stickstoffgehalt geringer als 30% ist, und die den Brenner des Drehrohrofens (1) versorgt.
- Leitungen, die das Recycling im Klinkerkühler (5) eines Teils des Rauchs (10) des Drehrohrofens (1) und des heißen Gases, das vom Klinkerkühler (5) erzeugt wurde, ermöglicht, wobei eine Gruppe von Tauschem (11, 14, 14ₐ) ermöglicht, die recycelten Gase abzukühlen, um den Klinkerkühler (5) mit Kühlgas zu versorgen.
